# EUROPEAN PATENT APPLICATION

(11) **EP 0 651 281 A1**
(43) Date of publication of application: **03.05.1995**
(21) Application number: 94203115.4
(22) Date of filing: 26.10.1994
(51) Int. Cl.: G03B 17/24, G11B 23/087

(54) **Magnetic head pressure pads**

(30) Priority: 29.10.1993 US 145447
(71) Applicant: EASTMAN KODAK COMPANY, Rochester, New York 14650-2201 (US)
(72) Inventor: Wagner, Rodney D., c/o EASTMAN KODAK COMPANY, Rochester, New York 14650-2201 (US); Faulkenberry, Stephen T., c/o EASTMAN KODAK CO., Rochester, New York 14650-2201 (US); Harmony, John R., c/o EASTMAN KODAK COMPANY, Rochester, New York 14650-2201 (US)
(74) Representative: Phillips, Margaret Dawn

(57) **Abstract**

Described herein is a pressure pad (14, 14A, 14B) for urging film (10) into contact with a magnetic head (12) in a camera of the type which has apparatus for interacting with a magnetic memory on a film (10). The pressure pad (14, 14A, 14B) is fabricated using a Santoprene® or Kraton® material as a core material (14A) and polyethylene as a coating material (14B). These materials are selected because of their mechanical properties and their suitability for a co-extrusion process. In addition, these materials have minimum interaction with the film (10). The coating material (14B) adheres effectively to the core material (14A) minimizing problems due to delamination.

## Description

This invention relates to magnetic head pressure pads and is more particularly, although not exclusively, concerned with the use of such pressure pads in cameras for which the film used therewith can have information in the form of orientation of regions in a magnetic strip layer on the film.

In the related art, photographic apparatus has been disclosed for which the film has a magnetic memory, typically in the form of a layer of magnetic material. The camera has a magnetic read/write head for writing information (in the form of oriented regions) on the film and/or for reading information already stored on the film into the camera.

An example of a camera which can use film having a magnetic memory associated therewith is described in US-A-5 097 278. This reference discloses a magnetic head which makes contact with the film surface. A film is transported between a magnetic head and a pressure pad. The structure of the magnetic head is determined by the requirements for interaction with the magnetic head on the film.

With respect to the pressure pad, in the past, a Teflon® coated rubber member has been used. This complexity of the structure of the pressure pad is a result of conflicting requirements wherein the pressure pad must be malleable, i.e., in order to urge the film against as broad an area of the magnetic head as possible while still permitting the film to pass with minimum friction between the magnetic head and the pressure pad. The malleable pad facilitates fabrication of the magnetic head by increasing the acceptable tolerances.

A need has therefore been felt for a pressure pad which is malleable and relatively frictionless which can be inexpensively fabricated. In addition, the pressure pad must be made of a material which does not interact chemically with the film.

It is therefore an object of the present invention to provide a pressure pad which overcomes the problems mentioned above.

In accordance with one aspect of the present invention, there is provided a pressure pad for urging a film into contact with a member, said pressure pad comprising:
a deformable core material; and
a material layer applied on to said core material, said layer having a relatively low coefficient of friction with respect to the film, and being made from a material capable of being extruded in combination with said core material.

In accordance with a second aspect of the present invention, there is provided a method of fabricating a pressure pad for use in urging film against a member, said method comprising the steps of:-
extruding an elongated member having groove formed therein from a material which is deformable; and
co-extruding a coating on said elongated member from a material having low coefficient of friction;
wherein said elongated member material and said coating material have a low interaction with said film.

The pressure pad is advantageously fabricated using a co-extrusion process. The pressure pad consists of a core of Santoprene® thermoplastic elastomer or a Kraton® thermoplastic elastomer with a surface layer of polyethylene. Each of these materials is suitable for the extrusion process. The polyethylene will knit to either the Santoprene® or Kraton® material. In addition, these materials do not interact chemically with the film itself. In order to reduce further the friction of the coating, an additive such as silicone can be added to the polyethylene coating.

The present invention provides a pressure pad for use in conjunction with a magnetic head which advantageously is malleable, while providing a surface which has relative low coefficient of friction; which has relatively little effect on the film passing between the magnetic head and the pressure pad ; and which can be fabricated using the relatively inexpensive extrusion techniques.

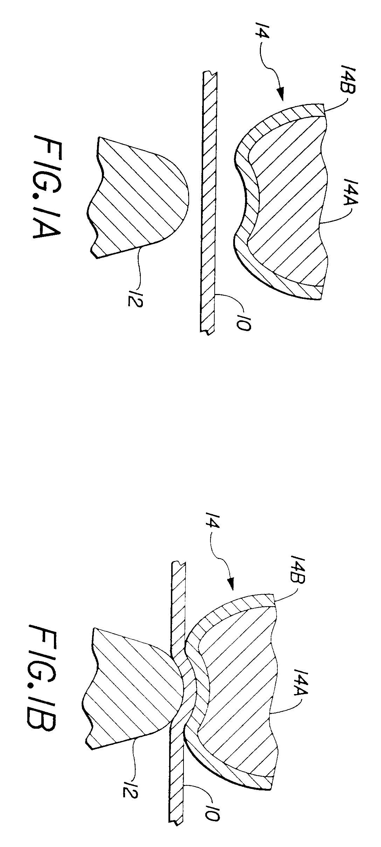

For a better understanding of the present invention, reference will now be made, by way of example only, to the accompanying drawings in which:-
Figure 1A is a cross-sectional view of the interrelationship between a film, a magnetic head, and a pressure pad when these elements are not in contact; and
Figure 1B is a cross-sectional view of the magnetic head, the pressure pad and the film when these elements are in contact.

Referring to Figure 1, film 10, a magnetic head 12 and a pressure pad 14 are shown. The pressure pad 14 comprises two components, a pressure pad core 14A and a pressure pad coating 14B. The core 14A is fabricated from a material which is relatively easily deformabie (e.g., with a durameter reading of 45-55, Shore A), for example, a Santoprene® or Kraton® thermoplastic elastomer. The coating 14B is fabricated from a high density polyethylene (e.g., Solvay T60-1500), a material which has a relatively low coefficient of friction. Because the pressure pad core 14A is deformable, the film 10 has greater contact with the magnetic head 12 than would be possible if the core 14A were fabricated with a non-deformable material. This greater contact is illustrated in Figure 1B. The pressure pad 14 is typically fabricated with a groove therein to increase the area of the film 10 engaged by the magnetic head 12.

The Santoprene® (e.g., 201-55) material or Kraton® (e.g., G7705) material were selected, not only for their mechanical properties, but also for the fact that these materials were suitable for an extrusion process. The heated Santoprene® or Kraton® material is forced through a heated die plate forming the desired contour. Then the extruded material is forced through a second die plate a layer of polyethylene is added as an overcoat, the layer of polyethylene being 0.762mm (0.003in) thick. This process forms continuous strips which can be cut to the required size. Similarly, the polyethylene material was selected, not only for the mechanical properties, but also because this material is suitable for use in the extrusion process and because this material will knit with the Santoprene® or Kraton® materials.

In addition, these selected materials do not interact with the film. The interaction with the film can be the result of out-gassed vapors or the result of contact. The selected materials provide a minimum interaction with the film passing by the pressure pad in the camera.

It will be now appreciated that there has been presented a process and a material for forming a superior pressure pad for use in a camera, a camera of the type includes apparatus for interacting with the magnetic memory of a film. Not only have the materials been chosen to provide the desired mechanical properties of the pressure pad, but the materials have been selected so that the pressure pad can be fabricated by a co-extrusion. The co-extrusion process permits relatively inexpensive fabrication of large quantities of the pressure pad. In addition, the coating material is selected not only to provide the correct mechanical property, but this material (polyethylene) adheres to the core material and insures that delamination does not take place.

While the invention has been described with particular reference to a preferred embodiment, it will be understood by those skilled in the art that various changes may be made and equivalents may be substituted for elements of the preferred embodiment without departing from invention.

By way of specific example, the pressure pad herein disclosed is not limited to urging a film against a magnetic head in a camera, but can be used anywhere a force must be applied to a film with minimum interaction with the film.

In addition, many modifications may be made to adapt a particular situation and material to a teaching of the invention without departing from the essential teachings of the present invention. For example, an additive, such as silicone oil (e.g., Dow Corning® 200 fluid) or other lubricant, can be added to the coating material to reduce further the coefficient of friction.

As is evident from the foregoing description, certain aspects of the invention are not limited to the particular details of the examples illustrated, and it is therefore contemplated that other modifications and applications will occur to those skilled in the art. It is accordingly intended that the claims shall cover all such modifications and applications as do not depart from the true spirit and scope of the invention.

## Claims

1. A pressure pad (14) for urging a film (10) into contact with a member (12), said pressure pad (14) comprising:
a deformable core material (14A); and
a material layer (14B) applied on to said core material (14A), said layer (14B) having a relatively low coefficient of friction with respect to the film (10), and being made from a material capable of being extruded in combination with said core material (14A).

2. A pressure pad according to claim 1, wherein said core material (14A) and said coating material (14B) have a minimum chemical interaction with said film (10).

3. A pressure pad according to claim 1 or 2, wherein said coating material (14B) and said core material (14A) are fabricated using a co-extrusion process.

4. A pressure pad according to any one of claims 1 to 3, wherein said core material (14A) is selected from the group of thermoplastic elastomers consisting of Santoprene® and Kraton®.

5. A pressure pad according to any one of claims 1 to 4, wherein said coating material (14B) is polyethylene.

6. A pressure pad according to claim 5, wherein said coating material (14B) includes a silicone additive.

7. A pressure pad according to any one of the preceding claims, including a fabricated groove for forcing said film (10) on to said member (12)

8. A pressure pad member (14) for use in urging a film (10) into contact with a member (12), said pressure pad member (14) comprising:
a core material (14A) having an elongated structure with a lengthwise groove fabricated therein, said core material (14A) being deformable and being fabricated using an extrusion process; and
a coating material (14B) applied on a surface of said core material (14A), said coating material (14B) having a relatively low coefficient of friction for said film (10) and being coated on said core material (14A) using a co-extrusion process.

9. A pressure pad according to any one of the preceding claims, wherein said member (12) comprises a magnetic head in a camera.

10. A method of fabricating a pressure pad (14) according to any one of the preceding claims, said method comprising the steps of:-
extruding an elongated member (14A) having groove formed therein from a material which is deformable; and
co-extruding a coating (14B) on said elongated member (14A) from a material having low coefficient of friction;
wherein said elongated member material (14A) and said coating material (14B) have a low interaction with said film (10).
